(19) Europäisches Patentamt
European Patent Office
Office européen des brevets

(11) **EP 4 346 081 A1**

(12) **EUROPÄISCHE PATENTANMELDUNG**

(43) Veröffentlichungstag:
   **03.04.2024   Patentblatt 2024/14**

(21) Anmeldenummer: **22199039.3**

(22) Anmeldetag: **30.09.2022**

(51) Internationale Patentklassifikation (IPC):
   **H02M 7/5395** (2006.01)   **H02M 1/00** (2006.01)
   **H02P 27/08** (2006.01)

(52) Gemeinsame Patentklassifikation (CPC):
   **H02M 7/5395; H02M 1/0012; H02P 27/08**

(84) Benannte Vertragsstaaten:
   **AL AT BE BG CH CY CZ DE DK EE ES FI FR GB
   GR HR HU IE IS IT LI LT LU LV MC MK MT NL NO
   PL PT RO RS SE SI SK SM TR**
   Benannte Erstreckungsstaaten:
   **BA ME**
   Benannte Validierungsstaaten:
   **KH MA MD TN**

(71) Anmelder: **Siemens Aktiengesellschaft
   80333 München (DE)**

(72) Erfinder:
   • **Nemeth-Csoka, Mihaly
     91056 Erlangen (DE)**
   • **Wedel, Bernd
     91096 Möhrendorf (DE)**

(74) Vertreter: **Siemens Patent Attorneys
   Postfach 22 16 34
   80506 München (DE)**

(54) **STEUERVERFAHREN FÜR EINEN SELBSTGEFÜHRTEN, MEHRPHASIGEN STROMRICHTER**

(57)   Die Erfindung betrifft ein Steuerverfahren zur Erzeugung von Spannungen ($u_{12}, u_{23}, u_{31}$) zwischen Phasenanschlüssen (4) eines selbstgeführten Stromrichters, wobei einem nullsystemfreien Sollspannungssystem ein Nullsystem überlagert wird, wobei in einem ersten Schritt die Phase mit der betraglich größten Spannung des nullsystemfreien Sollspannungssystem als relevante Phase ermittelt wird. Zur Verbesserung des Steuerverfahrens zur Erzeugung von Spannungen zwischen Phasenanschlüssen des selbstgeführten Stromrichters wird vorgeschlagen, dass in einem zweiten Schritt das Nullsystem derart gebildet wird, dass die Spannung ($u_{relevante\ Phase} + u_{Nullsystem}$) der relevanten Phase des nullsystembehafteten Spannungssystems, das sich aus der Überlagerung von dem nullsystemfreien Sollspannungssystem und dem Nullsystem ergibt, konstant ist und dass der Verlauf der Spannung ($u_{Nullsystem}$) des Nullsystems über die gesamte Periodendauer stetig ist. Weiter betrifft die Erfindung eine Steuervorrichtung (2) für einen selbstgeführten Stromrichter (1), eingerichtet zur Durchführung eines derartigen Steuerverfahrens. Die Erfindung betrifft ferner einen selbstgeführten Stromrichter (1) mit einer derartigen Steuervorrichtung (2).

FIG 1

EP 4 346 081 A1

**Beschreibung**

Die Erfindung betrifft ein Steuerverfahren zur Erzeugung von Spannungen zwischen Phasenanschlüssen eines selbstgeführten Stromrichters, wobei einem nullsystemfreien Sollspannungssystem ein Nullsystem überlagert wird, wobei in einem ersten Schritt die Phase mit der betraglich größten Spannung des nullsystemfreien Sollspannungssystem als relevante Phase ermittelt wird. Ferner betrifft die Erfindung eine Steuervorrichtung und einen selbstgeführten Stromrichter.

Die Spannungen an den Phasenanschlüssen eines mehrphasigen Stromrichters lassen sich mit Hilfe von Spannungssystemen, beispielsweise unter Zuhilfenahme von Raumzeigern, beschreiben. Die Spannung einer Phase ist dabei die Spannung, die zwischen einer Phase und dem Sternpunkt anliegt. Ziel der Regelung ist es, dass ein vorgegebenes Sollspannungssystem durch Schalthandlungen der abschaltbaren Halbleiter des selbstgeführten Stromrichters als Spannungen zwischen den Phasenanschlüssen anliegt.

Zur Erzielung einer im Vergleich zu einer Zwischenkreisspannung des Stromrichters hohen Ausgangsspannung hat es sich als vorteilhaft erwiesen, einem nullsystemfreien Sollspannungssystem ein Nullsystem, auch als Common-Mode-Spannung bezeichnet, zu überlagern. Durch diese addierte Nullspannung wird der Nullpunkt (Sternpunkt) zusätzlich belastet. Das Nullsystem wird bei der Dimensionierung eines Common-Mode-Filters berücksichtigt, welches zur Reduzierung der Gleichtaktschwingungen häufig eingesetzt wird.

Ein bekanntes Nullsystem ist die Supersinusmodulation, die auch als Raumzeigermodulation bezeichnet wird. Dabei wird zur Erhöhung einer erzielbaren Ausgangsspannung dem nullsystemfreien Sollspannungssystem ein Nullsystem mit einer gegenüber der Grundfrequenz dreifachen Frequenz überlagert.

Des Weiteren ist die Flat-Top Modulation bekannt, bei der neben der Erhöhung der Ausgangsspannung eine Reduktion der Schaltverluste des Stromrichters möglich ist.

Der Erfindung liegt die Aufgabe zugrunde, ein Steuerverfahren zur Erzeugung von Spannungen zwischen Phasenanschlüssen eines selbstgeführten Stromrichters zu verbessern.

Diese Aufgabe wird durch ein Steuerverfahren zur Erzeugung von Spannungen zwischen Phasenanschlüssen eines selbstgeführten Stromrichters gelöst, wobei einem nullsystemfreien Sollspannungssystem ein Nullsystem überlagert wird, wobei in einem ersten Schritt die Phase mit der betraglich größten Spannung des nullsystemfreien Sollspannungssystem als relevante Phase ermittelt wird, wobei in einem zweiten Schritt das Nullsystem derart gebildet wird, dass die Spannung der relevanten Phase des nullsystembehafteten Spannungssystems, das sich aus der Überlagerung von dem nullsystemfreien Sollspannungssystem und dem Nullsystem ergibt, konstant ist und dass der Verlauf der Spannung des Nullsystems über die gesamte Periodendauer stetig ist. Weiter wird diese Aufgabe durch eine Steuervorrichtung für einen selbstgeführten Stromrichter gelöst, die zur Durchführung eines derartigen Steuerverfahrens eingerichtet ist. Diese Aufgabe wird ferner durch einen selbstgeführten Stromrichter mit einer derartigen Steuervorrichtung gelöst.

Weitere vorteilhafte Ausgestaltungen der Erfindung sind in den anhängigen Ansprüchen angegeben.

Der Erfindung liegt unter anderem die Erkenntnis zugrunde, dass die Belastung des Nullpunktes bzw. des Sternpunktes dadurch reduzieren lässt, wenn das Nullsystem eine geringe Amplitude aufweist, keine Sprünge im zeitlichen Verlauf und in der ersten Ableitung des zeitlichen Verlaufs aufweisen.

Dazu wird vorgeschlagen, dass das Nullsystem durch das betragsmäßig größte Segment des mehrphasigen, insbesondere des dreiphasigen, Spannungssystems mit negativem Vorzeichen gebildet wird.

Auf einfache Weise lässt sich das Nullsystem dadurch erzeugen, dass betrachtet wird, welche Spannung des nullsystemfreien Sollspannungssystems betraglich am größten ist. Die Phase mit der betragsmäßig größten Spannung wird als relevante Phase bezeichnet. Die Spannung des Nullsystems wird so gewählt, dass die Spannung, die sich für die relevante Phase aus dem nullspannungsbehafteten Spannungssystem, d.h. der Überlagerung von nullsystemfreien Sollspannungssystem und Nullsystem, ergibt, konstant bleibt, solange diese Phase die betragsmäßig größte Spannung aufweist. Mit anderen Worten wird, sobald die relevante Phase wechselt, da die betreffende Phase die betragsmäßig größte Spannung aufweist, die Spannung der relevanten Phase dadurch konstant gehalten, dass die Differenz der Spannung zwischen dem augenblicklichen Wert und dem Wert zum Wechselzeitpunkt als negative Spannung des Nullsystems verwendet wird.

Es hat sich gezeigt, dass durch diese Bildung des Nullsystems die Spannung des Nullsystems stetig ist, also keine Sprünge aufweist. Darüber hinaus ist auch die zeitliche Ableitung der Spannung des Nullsystems stetig, also ohne Sprünge.

Als besonders vorteilhaft hat es sich erwiesen, das vorgeschlagene Verfahren für ein nullsystemfreies Sollspannungssystem zu verwenden, das einen periodischen Spannungsverlauf mit einer Frequenz und einer Amplitude aufweist. Dabei können sich Frequenz und/oder Amplitude zeitlich ändern. Dann weist das nullsystemfreies Sollspannungssystem einen periodischen Spannungsverlauf mit einer Frequenz und einer Amplitude auf. Mit dieser Randbedingung wird sichergestellt, dass sich aus der Überlagerung des nullsystemfreien Sollspannungssystems und dem Nullsystem ein Signal, das über die Dauer von 1/6 der Periodendauer konstant ist.

Das Verfahren hat sich als vorteilhaft erwiesen, da das Nullsystem eine um etwa 20% geringe Amplitude in der 3. Harmonischen im Vergleich zu bisher bekannten Methoden wie beispielsweise der Supersinusmodulation hat. Darüber hinaus ist es das Nullsystem mit der kleinstmöglichen Amplitude. Dies wird durch den konstanten Spannungsverlauf in der Spannung der relevanten Phase erreicht, die sich aus der Überlagerung des nullsystemfreien Sollspannungssystems mit dem Nullsystem ergibt. An den Stellen, an denen die relevante Phase wechselt, stellt der Stromrichter die größte Spannung zwischen zwei Phasen. Im Maximum des Betrags der Spannung der relevanten Phase ist die Amplitude des Nullsystem exakt so groß, dass diese maximale Spannung in der Phasenspannung beibehalten wird. Somit ist kein Verfahren möglich, das eine kleinere Amplitude im Nullsystem besitzt, ohne die maximal mögliche Ausgangsspannung des Stromrichters zu verkleinern.

Die Bestimmung des Nullsystems kann auf einfache Weise innerhalb der Steuervorrichtung durchgeführt werden, die zur Durchführung des vorgeschlagenen Verfahrens eingerichtet ist. Darüber hinaus kann die Steuervorrichtung auch die Signale zur Ansteuerung der Halbleiter genieren. Des Weiteren ist es möglich, dass die Steuervorrichtung das nullsystemfreie Sollspannungssystem generiert oder über eine Datenschnittstelle zugeführt bekommt.

Das Steuerverfahren hat sich für mehrphasige Stromrichter als vorteilhaft erwiesen, die mindestens drei Phasen aufweisen. Durch einen dreiphasigen Stromrichter lassen sich Energien pendelfrei austauschen, gleichzeitig sind die Verfahren der Spannungssysteme von Sollspannungssystem und Nullsystem für dreiphasige Systeme besonders einfach anwendbar. Dadurch lässt sich mit einem dreiphasigen Stromrichter die beschriebenen Vorteile für Standardkonfigurationen in einem dreiphasigen Antrieb auf einfache und kostengünstige Weise realisieren.

Bei einer vorteilhaften Ausgestaltung der Erfindung wird in einem zweiten Schritt zur Bestimmung der Spannung des Nullsystems ein erster Wert dadurch bestimmt, dass die Spannungen der Phasen des nullsystemfreien Sollspannungssystem jeweils quadriert und anschließend addiert werden, daraus die Quadratwurzel gezogen wird und anschließend durch den Wert der Quadratwurzel aus zwei dividiert wird, wobei die Spannung des Nullsystems dadurch ermittelt wird, dass der erste Wert im Falle eines positiven Wertes der Spannung der relevanten Phase vom Wert der Spannung der relevanten Phase subtrahiert wird und im Falle eines negativen Wertes der Spannung der relevanten Phase zum Wert der Spannung der relevanten Phase addiert wird und in beiden Fällen anschließend das Vorzeichen gewechselt wird. Neben der Bestimmung des Nullsystems, indem die Spannung der relevanten Phase des nullspannungsbehafteten Spannungssystems, das sich aus Überlagerung von nullsystemfreien Sollspannungssystem und dem Nullsystem ergibt, durch Verwendung eines Nullsystems konstant gehalten kann diese Eigenschaft auch mittels Berechnung erreicht werden. Auch dazu ist es in einem ersten Schritt notwendig durch Vergleich der einzelnen Phasenspannungen des nullsystemfreien Sollspannungssystems die betraglich größte zu ermitteln. Die Phase mit der betraglich größten Spannung ist dann die relevante Phase. Die Spannung des Nullsystems ergibt sich dann zu

$$u_{Nullsystem} = -\left( u_{relevante\ Phase} - sign(u_{relevante\ Phase}) \cdot \frac{\sqrt{u_{L1}^2 + u_{L2}^2 + u_{L3}^2}}{\sqrt{2}} \right) \qquad (1).$$

Dabei sind die Spannungen $u_{L1}$, $u_{L2}$ und $u_{L3}$ die Spannungen der Phasen des nullsystemfreien Sollspannungssystems, $U_{relevante\ Phase}$ die Spannung der relevanten Phase des nullsystemfreien Sollspannungssystems und $u_{Nullsystem}$ die Spannung des Nullsystems. Somit steht der Steuervorrichtung auch eine Möglichkeit zur Verfügung, das Nullsystem zu berechnen. Dieses kann auf besonders einfache Weise zuverlässig in der Steuervorrichtung umgesetzt werden und ist unabhängig von der genauen Bestimmung des zeitlichen Wechsels der relevanten Phase.

Durch diese Bestimmung der Spannung des Nullsystems wird sichergestellt,

- dass die Spannung der relevanten Phase des nullsystembehafteten Spannungssystems, das sich aus der Überlagerung von dem nullsystemfreien Sollspannungssystem und dem Nullsystem ergibt, konstant ist und
- dass der Verlauf der Spannung des Nullsystems über die gesamte Periodendauer stetig ist.

Die Bestimmung kann als Alternative zu der oben beschriebenen Berechnung auch auf folgendem Wege durchgeführt werden. Dabei wird vom Betrag der Spannung der relevanten Phase des nullsystemfreien Sollspannungssystems der erste Wert abgezogen. Dies ist der Betrag der Spannung des Nullsystem. Das Nullsystem bekommt das entgegengesetzte Vorzeichen der Spannung der relevanten Phase. Dies entspricht der Formel

$$u_{Nullsystem} = -sign(u_{relevante\ Phase})\left(|u_{relevante\ Phase}| - \frac{\sqrt{u_{L1}^2 + u_{L2}^2 + u_{L3}^2}}{\sqrt{2}}\right) \qquad (2).$$

Bei einer weiteren vorteilhaften Ausgestaltung der Erfindung wird das nullsystemfreie Sollspannungssystem durch einen sinusförmigen Verlauf der Spannungen der Phasen mit genau einer Frequenz und einer Amplitude gebildet, wobei der erste Wert dadurch ermittelt wird, dass die Amplitude mit der Quadratwurzel aus 3 multipliziert und durch 2 dividiert wird. Sobald Spannungsanteile mit einer anderen Frequenz als der Grundfrequenz im nullsystemfreien Sollspannungssystem vernachlässigbar sind, da diese eine Amplitude von weniger als 5%, insbesondere weniger als 1%, der Amplitude der Grundschwingung aufweisen, kann die Berechnung des Nullsystems noch einmal vereinfacht werden. Das Nullsystem ergibt sich dann zu

$$u_{Nullsystem} = -\left(u_{relevante\ Phase} - sign(u_{relevante\ Phase}) \cdot \frac{\sqrt{3}}{2}\hat{u}\right) \qquad (3),$$

wobei û die Amplitude des nullsystemfreien Sollspannungssystems darstellt. Auf diese Weise wird die Berechnung noch einmal deutlich vereinfacht. Diese Vereinfachung ist zulässig, wenn es sich bei dem nullsystemfreien Sollspannungssystem um periodische Phasenspannungen mit sinusförmigem Verlauf und gleicher Amplitude und gleicher Frequenz handelt. In diesem Fall vereinfacht sich die Gleichung (1) zu (3) und liefert somit das gleiche Ergebnis. Mit anderen Worten kann die Gleichung (1) bei der gegebenen Randbedingung des sinusförmigen Verlaufs der Spannungen durch Gleichung (3) ersetzt werden, da diese dann immer zum gleichen Ergebnis führt.

Alternativ kann auch hier vom Betrag der Spannung der relevanten Phase des nullsystemfreien Sollspannungssystems der erste Wert abgezogen werden. Dies ist der Betrag der Spannung des Nullsystems. Das Nullsystem bekommt das entgegengesetzte Vorzeichen der Spannung der relevanten Phase. Dies entspricht der Formel

$$u_{Nullsystem} = -sign(u_{relevante\ Phase})\left(|u_{relevante\ Phase}| - \frac{\sqrt{3}}{2}\hat{u}\right) \qquad (4).$$

Im Folgenden wird die Erfindung anhand der in den Figuren dargestellten Ausführungsbeispiele näher beschreiben und erläutert. Es zeigen:

FIG 1    den zeitlichen Verlauf der Phasenspannungen des nullsystemfreien Sollspannungssystems,
FIG 2    Zeitverläufe der Spannungen einer Phase,
FIG 3    eine Berechnungsvorschrift zur Bestimmung des Nullsystems,
FIG 4    eine weitere Berechnungsvorschrift zur Bestimmung des Nullsystems und
FIG 5    den Aufbau eines dreiphasigen, selbstgeführten Stromrichters.

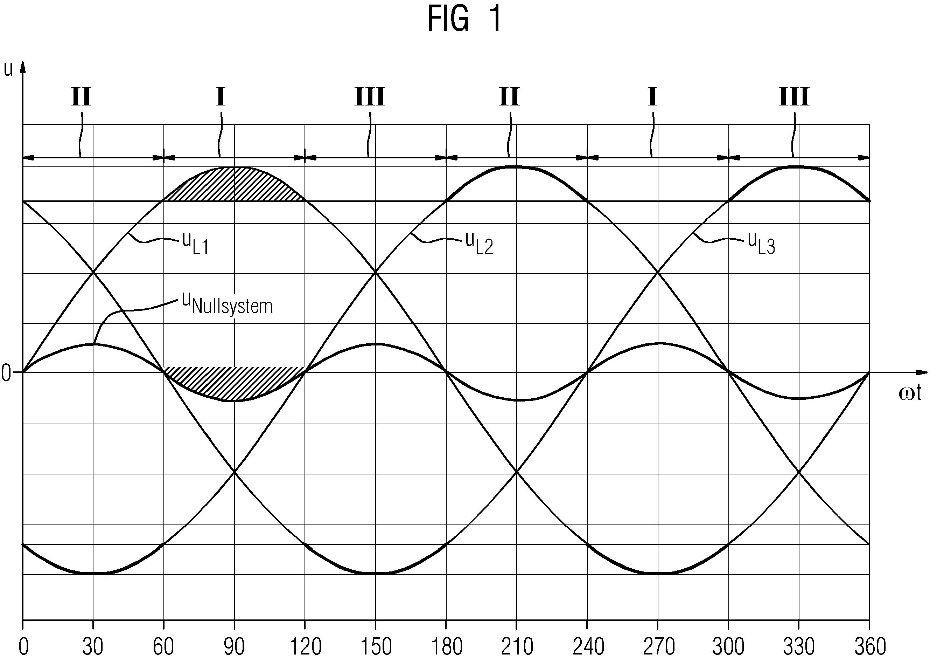

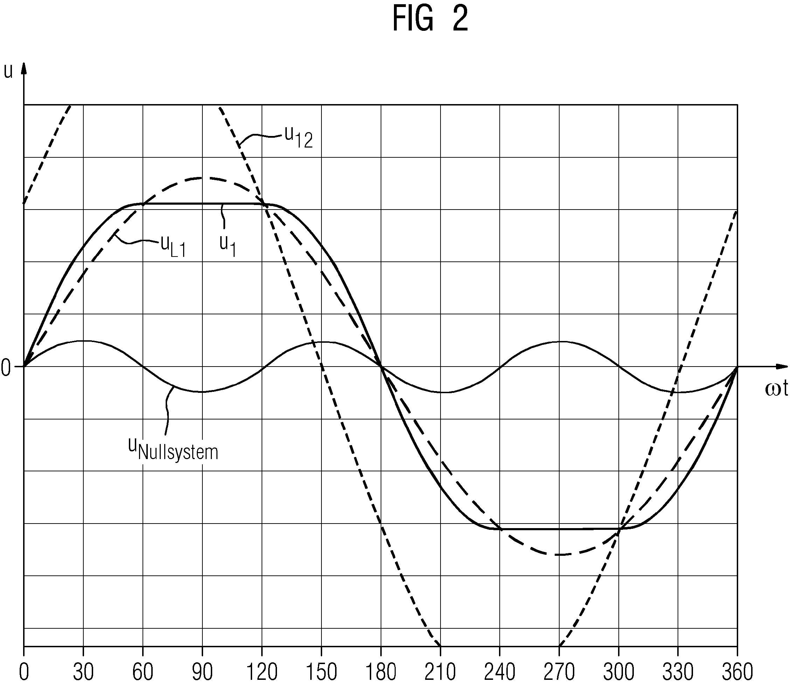

FIG 1 zeigt den zeitlichen Verlauf der Spannungen $u_{L1}$, $u_{L2}$, $u_{L3}$ zwischen dem jeweiligen Phasenanschluss 4 und einem nicht näher dargestellten Sternpunkt eines dreiphasigen, selbstgeführten Stromrichters 1. Diese Spannungen werden auch als Spannung der Phase oder einfach Phasenspannung bezeichnet. Dieses Spannungssystem aus den Spannungen der Phasen ist, da es sich auf den Sternpunkt bezieht, nullsystemfrei. Es stellt gleichzeitig das nullsystemfreie Sollspannungssystem dar. In einem ersten Schritt bei der Bestimmung des Nullsystems wird die betraglich größte der Phasenspannungen $u_{L1}$, $u_{L2}$, $u_{L3}$ ermittelt. Diese wird als relevante Phase bezeichnet. Im Bereich I ist die Spannung $u_{L1}$ der ersten Phase die betraglich größte Spannung. Im Bereich II ist die Spannung $u_{L2}$ der zweiten Phase die betraglich größte Spannung. Im Bereich III ist die Spannung $u_{L3}$ der dritten Phase die betraglich größte Spannung. Dieser jeweilige Abschnitt der Phasenspannung ist in dem zeitlichen Verlauf der jeweiligen Phasenspannung fett dargestellt. Somit ist der fett dargestellte Verlauf der Zeitverlauf der Spannung $U_{relevante\ Phase}$ der relevanten Phase. Das Nullsystem wird so gewählt, dass die Spannung der relevanten Phase des nullsystembehafteten Spannungssystem, also der Überlagerung von dem nullsystemfreien Sollspannungssystem und dem Nullsystem, konstant bleibt. Hervorgehoben ist dies durch die schraffierten Bereiche. Mit anderen Worten bringt diese dargestellte Spannung $u_{Nullsystem}$ des Nullsystems durch Überlagerung mit der nullsystemfreien Sollspannung die Spannung des nullspannungsbehafteten Spannungssystems in der relevanten Phase auf einen konstanten Wert. Dieser Zusammenhang ist auch in der FIG 2 dargestellt. Zur Vermeidung von Wiederholungen wird hinsichtlich der FIG 2 auf die Beschreibung zur FIG 1 sowie auf die dort eingeführten Bezugszeichen verwiesen. Dort ist im Winkelbereich von 60 bis 120 die erste Phase die relevante Phase. Die Spannung $u_{L1}$ des nullsystemfreien Sollspannungssystems stellt einen sinusförmigen dar. Das Nullsystem ist so gewählt, dass die Spannung $u_1$ des nullspannungsbehaftete Spannungssystem in der ersten Phase konstant ist, solange diese erste Phase die relevante Phase ist. Darüber hinaus ist in FIG 2 auch noch die Spannung $u_{12}$ zwischen den Anschlüssen der ersten und der zweiten Phase dargestellt. Diese Spannung wird auch als verkettete Spannung zwischen der ersten und der zweiten Phase bezeichnet. Es ist erkennbar, dass das Nullsystem keinen Einfluss auf diese verkettete Spannung an. Darüber hinaus ist aus der FIG 1 und der FIG 2 ersichtlich, dass der Verlauf der Spannung $u_{Nullsystem}$ des Nullsystem stetig ist. Darüber hinaus ist auch die Ableitung der Spannung $u_{Nullsystem}$ des Nullsystems stetig.

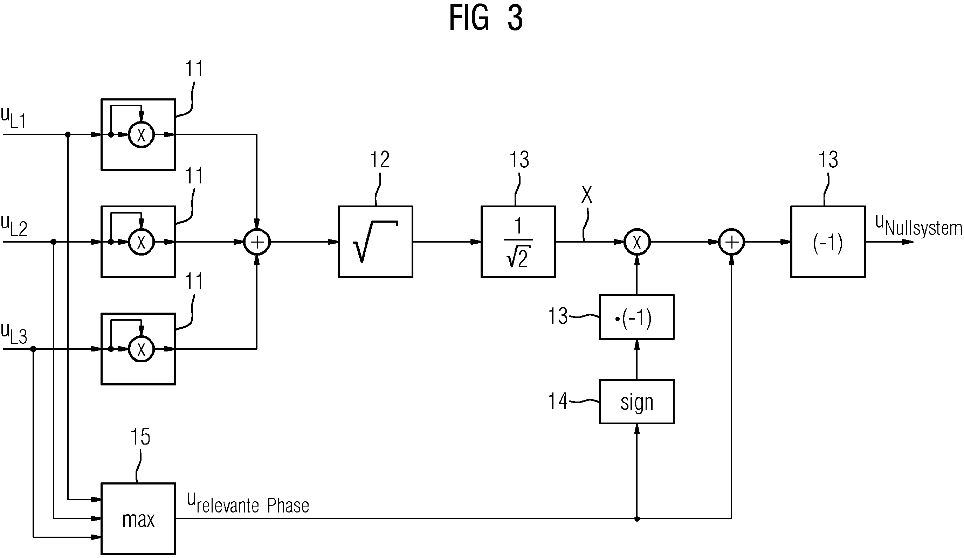

FIG 3 zeigt ein Schema zur Bestimmung der Spannung $u_{Nullsystem}$ des Nullsystems. Dazu werden die Spannungen $u_{L1}$, $u_{L2}$, $u_{L3}$ der einzelnen Phasen des nullsystemfreien Sollspannungssystems jeweils mittels eines Quadrierers 11 quadriert und addiert. Anschließend wird aus diesem Wert mittels eines ersten Berechnungselements 12 zum Ziehen eine Quadratwurzel die Wurzel aus diesem Wert gezogen. Anschließend erfolgt eine Multiplikation mittels eines zweiten Berechnungselementes 13 mit dem dargestellten Faktor. Dies ergibt den ersten Wert x. Parallel dazu wird aus den Spannungen $u_{L1}$, $u_{L2}$, $u_{L3}$ der einzelnen Phasen die relevante Phase mit der betraglich größten Spannung bestimmt. Ist das Vorzeichen der Spannung $U_{relevante\ Phase}$ der relevanten Phase positiv, so wird der erste Wert x von der Spannung $u_{relevante\ Phase}$ der relevanten Phase abgezogen, ist das Vorzeichen negativ, so wird der erste Wert zur Spannung $u_{relevan-te\ Phase}$ der relevanten Phase addiert. Zur Bestimmung der Spannung $u_{Nullsystem}$ des Nullsystems wird anschließend das Vorzeichen noch gewechselt. Dies entspricht einer Multiplikation mit dem Faktor (-1).

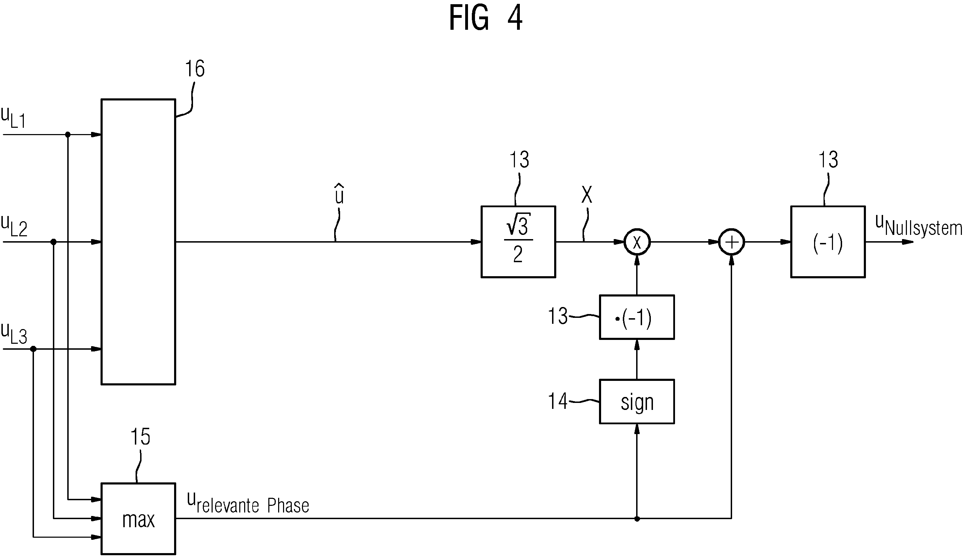

Eine alternative Möglichkeit für die Berechnung für die Berechnung der Spannung $u_{Nullsystem}$ des Nullsystems zeigt FIG 4. Im Falle sinusförmiger Spannungen der Phasen des nullsystemfreien Sollspannungssystems lässt sich die Bestimmung nach FIG 3 deutlich vereinfachen. Zur Vermeidung von Wiederholungen wird auf die Beschreibung zur FIG 3 und die dort eingeführten Bezugszeichen verwiesen. Der erste Wert x ergibt sich auf einfache Weise durch die Bestimmung der Amplitude $û$ des sinusförmigen Spannungsverlaufs mittels des Elements 16 zur Bestimmung der Amplitude. Die Amplitude $û$ muss nur noch mit dem dargestellten Faktor mittels des zweiten Berechnungselements 13 multipliziert werden und es ergibt sich der erste Wert x.

Die weiteren Rechenschritte um ausgehend vom ersten Wert x zur Spannung $u_{Nullsystem}$ des Nullsystems zu gelangen, entsprechen denen der FIG 3.

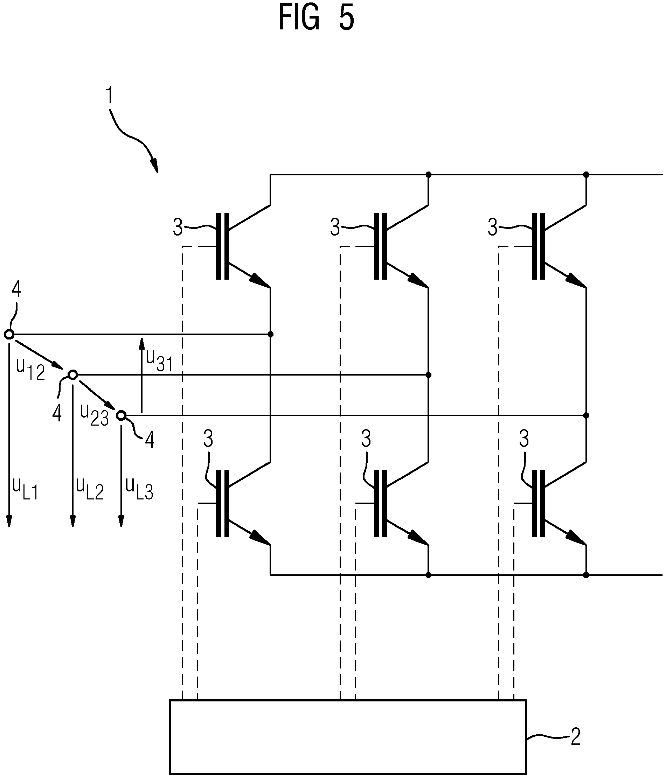

FIG 5 zeigt einen dreiphasigen, selbstgeführten Stromrichter 1. Dieser weist abschaltbare Halbleiter 3 zur Erzeugung von Spannungen $u_{12}$, $u_{23}$, $u_{31}$ zwischen Phasenanschlüssen 4 des selbstgeführten Stromrichters 1 auf. Die Spannungen $u_{L1}$, $u_{L2}$, $u_{L3}$ der Phasen liegen dabei gegenüber einem nicht näher dargestellten Sternpunkt an. Angesteuert werden die abschaltbaren Halbleiter 3 durch die Steuervorrichtung 2. Die Steuervorrichtung 2 übernimmt dabei auch die Berechnung des Nullsystems.

Zusammenfassend betrifft die Erfindung ein Steuerverfahren zur Erzeugung von Spannungen $u_{12}$, $u_{23}$, $u_{31}$ zwischen Phasenanschlüssen 4 eines selbstgeführten Stromrichters, wobei einem nullsystemfreien Sollspannungssystem ein Nullsystem überlagert wird, wobei in einem ersten Schritt die Phase mit der betraglich größten Spannung des nullsystemfreien Sollspannungssystem als relevante Phase ermittelt wird. Zur Verbesserung des Steuerverfahrens zur Erzeugung von Spannungen zwischen Phasenanschlüssen des selbstgeführten Stromrichters wird vorgeschlagen, dass in einem zweiten Schritt das Nullsystem derart gebildet wird, dass die Spannung $u_{relevan-te\ Phase}+u_{Nullsystem}$ der relevanten Phase des nullsystembehafteten Spannungssystems, das sich aus der Überlagerung von dem nullsystemfreien Sollspannungssystem und dem Nullsystem ergibt, konstant ist und dass der Verlauf der Spannung $u_{Nullsystem}$ des Nullsystems über die gesamte Periodendauer stetig ist. Weiter betrifft die Erfindung eine Steuervorrichtung 2 für einen selbstgeführten Stromrichter 1, eingerichtet zur Durchführung eines derartigen Steuerverfahrens. Die Erfindung betrifft ferner einen selbstgeführter Stromrichter 1 mit einer derartigen Steuervorrichtung 2.

## Patentansprüche

1. Steuerverfahren zur Erzeugung von Spannungen ($u_{12}$,$u_{23}$,$u_{31}$) zwischen Phasenanschlüssen (4) eines selbstgeführten Stromrichters (1), wobei einem nullsystemfreien Sollspannungssystem ein Nullsystem überlagert wird, wobei in einem ersten Schritt die Phase mit der betraglich größten Spannung des nullsystemfreien Sollspannungssystem als relevante Phase ermittelt wird **dadurch gekennzeichnet, dass** in einem zweiten Schritt das Nullsystem derart gebildet wird,

   - dass die Spannung ($u_{relevante\ Phase}+u_{Nullsystem}$) der relevanten Phase des nullsystembehafteten Spannungssystems, das sich aus der Überlagerung von dem nullsystemfreien Sollspannungssystem und dem Nullsystem ergibt, konstant ist und
   - dass der Verlauf der Spannung ($u_{Nullsystem}$) des Nullsystems über die gesamte Periodendauer stetig ist.

2. Steuerverfahren nach Anspruch 1, wobei in einem zweiten Schritt zur Bestimmung der Spannung ($u_{Nullsystem}$) des Nullsystems ein erster Wert (x) dadurch bestimmt wird, dass die Spannungen der Phasen ($u_{L1}$,$u_{L2}$,$u_{L3}$) des nullsystemfreien Sollspannungssystem jeweils quadriert und anschließend addiert werden, daraus die Quadratwurzel gezogen wird und anschließend durch den Wert der Quadratwurzel aus zwei dividiert wird, wobei die Spannung ($u_{Nullsystem}$) des Nullsystems dadurch ermittelt wird, dass der erste Wert im Falle eines positiven Wertes der Spannung ($u_{relevante\ Phase}$) der relevanten Phase vom Wert der Spannung ($u_{relevante\ Phase}$) der relevanten Phase subtrahiert wird und im Falle eines negativen Wertes der Spannung ($u_{relevante\ Phase}$) der relevanten Phase zum Wert der Spannung ($u_{re-levante\ Phase}$) der relevanten Phase addiert wird und in beiden Fällen anschließend das Vorzeichen gewechselt wird.

3. Steuerverfahren nach einem der Anspruch 1 oder 2, wobei das nullsystemfreie Sollspannungssystem durch einen sinusförmigen Verlauf der Spannungen ($u_{L1}$,$u_{L2}$,$u_{L3}$) der Phasen mit genau einer Frequenz und einer Amplitude ($û$) gebildet wird, wobei der erste Wert (x) dadurch ermittelt wird, dass die Amplitude ($û$) mit der Quadratwurzel aus 3 multipliziert und durch 2 dividiert wird.

4. Steuervorrichtung (2) für einen selbstgeführten Stromrichter (1), eingerichtet zur Durchführung eines Steuerverfahrens nach einem der Ansprüche 1 bis 3.

5. Selbstgeführter Stromrichter (1) mit einer Steuervorrichtung (2) nach Anspruch 4.

6. Selbstgeführter Stromrichter (1) nach Anspruch 5, wobei der selbstgeführte Stromrichter (1) dreiphasig ausgebildet ist.

# FIG 1

EP 4 346 081 A1

FIG 2

EP 4 346 081 A1

# FIG 3

FIG 4

# FIG 5

Europäisches
Patentamt

European
Patent Office

Office européen
des brevets

**EUROPÄISCHER RECHERCHENBERICHT**

**Nummer der Anmeldung**

**EP 22 19 9039**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2011 130616 A (NSK LTD) 30. Juni 2011 (2011-06-30) * Gleichungen 1, 13, 14, 24; Absätze [0046], [0060], [0085], [0086], [0089], [0093]; Abbildungen 2,6,7,14 * ----- | 1-6 | INV. H02M7/5395 H02M1/00 H02P27/08 |
| X | EP 3 849 075 A1 (NSK LTD [JP]) 14. Juli 2021 (2021-07-14) * Absätze [0048], [0064], [0065]; Abbildungen 5,9 * ----- | 1-6 | |
| X | US 5 475 581 A (LANSBERRY GEOFFREY B [US]) 12. Dezember 1995 (1995-12-12) * Spalte 11, Zeilen 30-43; Abbildungen 7, 9-11 * * Spalte 13, Zeilen 7-20 * * Spalte 14, Zeilen 55-61 * ----- | 1-6 | |
| X | SMA SOLAR TECHNOLOGY: KAREL DEBRABANDERE: "Modulationsverfahren für dreiphasige Wechselrichter", PRIOR ART PUBLISHING, 31. Januar 2013 (2013-01-31), XP040573655, | 1,4 | RECHERCHIERTE SACHGEBIETE (IPC) |
| A | * Abbildungen 13,20 * ----- | 2,3,5,6 | H02M H02P |

Der vorliegende Recherchenbericht wurde für alle Patentansprüche erstellt

| Recherchenort | Abschlußdatum der Recherche | Prüfer |
|---|---|---|
| Den Haag | 21. Februar 2023 | Kanelis, Konstantin |

**ANHANG ZUM EUROPÄISCHEN RECHERCHENBERICHT
ÜBER DIE EUROPÄISCHE PATENTANMELDUNG NR.**

EP 22 19 9039

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-02-2023

| Im Recherchenbericht angeführtes Patentdokument | Datum der Veröffentlichung | Mitglied(er) der Patentfamilie | Datum der Veröffentlichung |
|---|---|---|---|
| JP 2011130616 A | 30-06-2011 | JP 5532904 B2<br>JP 2011130616 A | 25-06-2014<br>30-06-2011 |
| EP 3849075 A1 | 14-07-2021 | CN 113196643 A<br>EP 3849075 A1<br>JP 7107430 B2<br>JP WO2021106373 A1<br>US 2022306186 A1<br>WO 2021106373 A1 | 30-07-2021<br>14-07-2021<br>27-07-2022<br>02-12-2021<br>29-09-2022<br>03-06-2021 |
| US 5475581 A | 12-12-1995 | TW 272337 B<br>US 5475581 A<br>WO 9534942 A1 | 11-03-1996<br>12-12-1995<br>21-12-1995 |

EPO FORM P0461

Für nähere Einzelheiten zu diesem Anhang : siehe Amtsblatt des Europäischen Patentamts, Nr.12/82